# EUROPÄISCHE PATENTSCHRIFT

(11) **EP 0 964 985 B1**
(45) Veröffentlichungstag und Bekanntmachung des Hinweises auf die Patenterteilung: **10.07.2002**
(21) Anmeldenummer: 98914874.7
(22) Anmeldetag: 06.03.1998
(51) Int. Cl.: F02B 75/06, H02P 7/00

(54) **ANTRIEBSSYSTEM, INSBESONDERE FÜR EIN KRAFTFAHRZEUG UND VERFAHREN ZUR STEUERUNG DER LEERLAUFDREHZAHL EINES VERBRENNUNGSMOTORS**
PROPULSION SYSTEM, ESPECIALLY FOR A MOTOR VEHICLE AND METHOD FOR REGULATING THE IDLING SPEED OF AN INTERNAL COMBUSTION ENGINE
SYSTEME D'ENTRAINEMENT NOTAMMENT POUR VEHICULE AUTOMOBILE ET PROCEDE DE COMMANDE DU REGIME AU RALENTI D'UN MOTEUR A COMBUSTION INTERNE

(30) Priorität: 06.03.1997 DE 19709134
(43) Veröffentlichungstag der Anmeldung: 22.12.1999
(73) Patentinhaber: Continental ISAD Electronic Systems GmbH & Co. oHG, 86899 Landsberg/Lech (DE)
(72) Erfinder: PELS, Thomas, D-77855 Achern (DE); REVERMANN, Klaus, D-26835 Schwerinsdorf (DE); ZEYEN, Klaus-Peter, D-50670 Köln (DE)
(74) Vertreter: Lippich, Wolfgang, Dipl.-Pys., Dr.rer.nat.
(86) Internationale Anmeldenummer: EP9801300
(87) Internationale Veröffentlichungsnummer: WO9839560

(56) Entgegenhaltungen:
- EP-A- 0 354 790
- EP-A- 0 427 568
- WO-A-97/08435
- DE-A- 4 038 301
- GB-A- 2 213 292
- US-A- 5 245 966
- PATENT ABSTRACTS OF JAPAN vol. 009, no. 121 (M-382), 25.Mai 1985 & JP 60 006039 A (MAZDA KK;OTHERS: 01), 12.Januar 1985,
- PATENT ABSTRACTS OF JAPAN vol. 010, no. 163 (M-487), 11.Juni 1986 & JP 61 016247 A (NISSAN JIDOSHA KK), 24.Januar 1986,
- "vehicle idling vibration reduction using elctric machine active torque control ", Y. KADOMUKAI; M.YAMAKADA et al (4/1993

## Beschreibung

Die Erfindung betrifft ein Antriebssystem, insbesondere für ein Kraftfahrzeug, sowie ein Verfahren zum Steuern der Leerlaufdrehzahl eines Verbrennungsmotors.

Im Leerlauf dient ein z.B. als Antriebsaggregat eines Kraftfahrzeugs fungierender Verbrennungsmotor nicht zum Antrieb des Fahrzeugs. Er braucht nur die für die Eigendrehung aufzubringende Arbeit zu leisten und daneben ggf. mechanische oder elektrische Hilfsaggregate anzutreiben, wie Pumpen, Servoantriebe und einen Generator.

Um Kraftstoffverbrauch, Schadstoffausstoß und Geräuschentwicklung gering zu halten, wählt man die Leerlaufdrehzahl im allgemeinen möglichst niedrig. Aus Komfortgründen kann sie jedoch nur bis zu einer bestimmten Drehzahl abgesenkt werden. Im allgemeinen ist eine Leerlaufdrehzahlregelung vorgesehen, welche die Leerlaufdrehzahl möglichst konstant auf einem Wert etwas über dieser Mindestdrehzahl hält.

Die Mindestdrehzahl ist temperaturabhängig. Im kalten Zustand des Verbrennungsmotors liegt sie höher als z.B. bei Betriebstemperatur. Besonders ausgeprägt ist dies bei tiefen Minustemperaturen (z.B. minus 20°C). Die einfachste Möglichkeit, einen funktionsfähigen Leerlauf bei allen Temperaturen zu gewährleisten, ist, die Leerlauf-Solldrehzahl global (d.h. für alle Temperaturen) soweit anzuheben, daß sie knapp über der Mindestdrehzahl der tiefsten vorkommenden Temperatur liegt. Dies hat allerdings den Nachteil, daß die Leerlaufdrehzahl - von kurzen Startphasen bei der tiefsten Temperatur abgesehen - unnötig hoch läge. Im Stand der Technik wird deshalb der Leerlaufdrehzahl-Sollwert temperaturabhängig geführt, und zwar wird er zu niedrigen Temperaturen hin angehoben. Dies geschah anfangs durch Handsteuerung, seit geraumer Zeit ist eine Leerlaufdrehzahlregelung mit temperaturabhängig geführtem Drehzahl-Sollwert üblich. (siehe z.B. Kraftfahrtechnisches Taschenbuch/Bosch, 21. Auflage, 1991, S. 435).

Diese, bereits seit Jahrzehnten allgemein verbreitete Lösung funktioniert grundsätzlich und wird - angesichts der nahen Positionierung des Leerlaufdrehzahl-Sollwerts an der Mindestdrehzahl bei allen praktisch vorkommenden Temperaturen - als optimale Lösung hinsichtlich Kraftstoffverbrauch, Schadstoffausstoß und Geräuschentwicklung angesehen.

Die Erfindung hat sich zum Ziel gesetzt, ein hinsichtlich des Leerlaufverhaltens verbessertes Antriebssystem sowie ein entsprechendes Verfahren bereitzustellen.

Diese Aufgabe wird vorrichtungsmäßig gemäß Anspruch 1 durch ein Antriebssystem, insbesondere für ein Kraftfahrzeug, gelöst, welches folgendes umfaßt:
- einen Verbrennungsmotor;
- eine elektrische Maschine, die den Verbrennungsmotor mit einem variierenden Drehmoment beaufschlagt, derart, daß Drehungleichförmigkeiten des Verbrennungsmotors verringert werden,
- wobei die Amplitude der Änderungen des von der elektrischen Maschine aufgebrachten Drehmoments bei Leerlauf in kaltem Zustand des Verbrennungsmotors größer als im warmen Zustand ist; und
- eine Leerlaufsteuerung, welche die Leerlaufdrehzahl des Verbrennungsmotors in kaltem Zustand nicht gegenüber derjenigen in warmem Zustand erhöht.

Es sei angemerkt, daß der Begriff "Steuerung" im gesamten vorliegenden Text in einem weiten Sinn verstanden wird, der oberbegriffsartig die Begriffe "Steuerung im engen Sinn" (d.h. Beeinflussung einer Größe in offener Wirkungskette) und "Regelung" (d.h. Beeinflussung einer Größe aufgrund Vergleich mit einer anderen vorgegebenen Größe) umfaßt. Entsprechendes gilt für abgeleitete Begriffe, wie "Steuern", "Steuergerät", etc.

Der Erfindung liegen folgende Erkenntnisse zugrunde: bei einem Hubkolben-Verbrennungsmotor bedingen die von der Verbrennung hervorgerufenen Gaskräfte und die durch die hin- und hergehenden Massen hervorgerufenen Massenkräfte Drehmomentschwankungen, welche sich in Drehungleichförmigkeiten um die mittlere Leerlaufdrehzahl äußern. Diese treten im wesentlichen periodisch als Oberschwingungen zur Kurbelwellendrehung auf. Beispielsweise führen die Gasund Massenkräfte beim 4-Zylinder-Reihenmotor zu einer Drehungleichförmigkeit, deren Grundschwingung der doppelten Drehfrequenz entspricht (z.B. hat die Grundschwingung bei einer Leerlaufdrehzahl von 600 min⁻¹ eine Frequenz von 20 Hz). Bei kaltem Motor ist i.a. der zu überwindende Reibungswiderstand aufgrund der höheren Zähigkeit des Motoröls größer. Zur Überwindung dieses größeren Reibungswiderstandes muß der Motor mehr leisten, er erhält hierfür z.B. eine größere Gemischmenge. Dies wiederum bedingt eine Vergrößerung der Gaskräfte (die nur von der Drehzahl abhängigen Massenkräfte bleiben hiervon, solange die Drehzahl sich nicht ändert, unberührt).

Es gibt bei einem Verbrennungsmotor i.a. eine Drehzahl (nicht zu verwechseln mit der o.g. Mindestdrehzahl), die auch kurzfristig nicht unterschritten werden sollte, um sicherzustellen, daß der Motor nicht unruhig läuft oder stehen bleibt. Diese Drehzahl wird im folgenden kritische Drehzahl genannt. Die mittlere (d.h. die über Drehungleichförmigkeiten gemittelte) Leerlaufdrehzahl ist so zu wählen, daß der im Verlauf der Drehungleichförmigkeiten kleinste auftretende Drehzahlwert einen bestimmten Sicherheitsabstand über der kritischen Drehzahl liegt (die so gewählte mittlere Drehzahl entspricht der obigen Mindestdrehzahl). Aufgrund der im kalten Zustand erhöhten Drehungleichförmigkeit muß - wie dies herkömmlicherweise auch getan wird - die mittlere Leerlaufdrehzahl entsprechend der Vergrößerung der Drehungleichförmigkeitsamplitude angehoben werden, um die kritische Drehzahl plus Sicherheitsabstand nicht zu unterschreiten.

Die Erfindung geht einen anderen Weg: und zwar wird bei ihr durch aktiven Eingriff vermieden, daß die Drehungleichförmigkeitsamplitude bei kaltem Motor größer als bei warmem ist. Dies ermöglicht, die mittlere Leerlaufdrehzahl bei Kälte nicht anzuheben, erlaubt also eine niedrige globale Leerlaufdrehzahl.

Die Verminderung der Drehungleichförmigkeitsamplitude wird dadurch bewirkt, daß die elektrische Maschine ein variierendes Drehmoment aufbringt, welches im zeitlichen Verlauf den Drehmomentschwankungen des Verbrennungsmotors ähnelt, aber im wesentlichen gegenphasig zu ihnen ist. Grundsätzlich ist es möglich, die drehungleichförmigkeits-verringernde Funktion der elektrischen Maschine nur beim Kaltleerlauf wirken zu lassen, so daß dort die Drehungleichförmigkeitsamplitude derjenigen des Warmlaufs angeglichen wird. Vorteilhaft wirkt die elektrische Maschine jedoch auch beim Warmlauf drehungleichförmigkeits-verringernd. In diesem Fall ist die drehungleichförmigkeits-verringernde Wirkung der elektrischen Maschine im Kaltleerlauf größer als im Warmleerlauf. Die im Anspruch 1 angegebene Formulierung, daß die Amplitude der von der Maschine aufgebrachten Drehmomentänderungen in kaltem Zustand größer als im warmen Zustand ist, umfaßt beide obigen Möglichkeiten.

Die bei niedriger Temperatur größeren Gaskräfte führen i.a. nicht nur zu einer Vergrößerung der Amplitude der Gesamt-Drehungleichförmigkeit, sondern auch zu einer geringfügigen Verschiebung des Phasenwinkels (da die Phasen der Gas- und Massenkräfte unterschiedlich sind und der Anteil der Gaskräfte zunimmt). Dies wird vorteilhaft berücksichtigt, indem bei niedriger Temperatur nicht nur die Amplitude des durch die elektrische Maschine aufgebrachten Gegendrehmoments vergrößert wird, sondern auch die Phase so verschoben wird, daß die Gegenphasigkeit des Gegendrehmoments im wesentlichen erhalten bleibt.

Als elektrische Maschine ist jede Rotationsmaschine geeignet, welche die geforderte schnelle Variation der Drehmomente erzeugen kann. Besonders vorteilhaft ist hierfür eine Drehfeldmaschine. Hierunter wird - im Gegensatz zu einer Stromwendermaschine - eine insbesondere kommutatorlose Maschine verstanden, in der z.B. der Ständer ein magnetisches Drehfeld erzeugt, welches um 360° umläuft und den Läufer mitnimmt. Die elektrische Maschine kann insbesondere als Asynchronmaschine, z.B. mit Kurzschlußläufer, oder als Synchronmaschine, z.B. mit Läufer mit ausgeprägten Magnetpolen ausgebildet sein. Der Kurzschlußläufer bei der Asynchronmaschine kann z.B. ein Käfigläufer mit Kurzschlußstäben in Axialrichtung sein. Bei anderen Ausgestaltungen der Asynchronmaschine weist der Läufer Wicklungen auf, die über Schleifringe extern kurzgeschlossen werden können. Die ausgeprägten Magnetpole des Läufers bei der Synchronmaschine erreicht man z.B. durch Permanentmagnete oder durch Elektromagnete, die z.B. über Schleifringe mit Erregerstrom gespeist werden können. Die Drehmomentvariation wird durch eine entsprechende Variation des Drehfelds bewirkt. Beispielsweise wird die elektrische Maschine im schnellen Wechsel als Generator und Motor betrieben. Die hierfür nötigen veränderlichen Ströme und Spannungen können z.B. mit Hilfe eines Wechselrichters erzeugt werden, der Generator- und Motorbetrieb herbeiführen kann und schnell zwischen beiden Betriebsweisen umsteuert. Ein Beispiel für die aktive Dämpfung von Drehungleichförmigkeiten mit Hilfe einer elektrischen Maschine - dort einer Sektormaschine - ist aus der DE 44 23 577 A1 bekannt.

Die elektrische Maschine kann indirekt, etwa über Ritzel, Keilriemen, etc. mit der Verbrennungsmotorwelle gekoppelt sein. Vorteilhaft sitzt aber ein Teil der Maschine, insbesondere der Läufer, direkt auf der Motorwelle und ist ggf. drehfest mit ihr gekoppelt. Der Läufer kann beispielsweise auf der zum Getriebe führenden Welle sitzen, oder an der anderen Seite des Verbrennungsmotors auf dem dort blind endenden Wellenstummel. Ein anderer Maschinenteil, insbesondere der Ständer, ist drehfest mit einem nicht drehbaren Teil verbunden oder lösbar verbindbar, z.B. dem Motor- oder Getriebegehäuse.

Neben ihrer erfindungsgemäßen Funktion im Rahmen der Leerlaufsteuerung kann die elektrische Maschine vorteilhaft eine oder mehrere Zusatzfunktionen haben, z.B. als Aktivdämpfer zur Reduzierung von Drehungleichförmigkeiten auch bei höheren Drehzahlen, als Starter für den Verbrennnungsmotor, als Generator für die Bordnetzversorgung, als zusätzlicher Fahrzeugantriebsmotor und/oder als zusätzliche Fahrzeugbremse dienen.

Gegenüber herkömmlichen Leerlaufdrehzahlregelungen hat die Erfindung aufgrund der Nichterhöhung der Leerlaufdrehzahl im Kaltleerlauf deutliche Vorteile, indem sie
- einen geringeren Kraftstoffverbrauch,
- eine geringere Abgasemission, und
- eine geringere Lärmbelastung
ermöglicht. Sie leistet damit einen Beitrag zum Umweltschutz und zum sinnvollen Einsatz knapper Ressourcen.

Die aktive Verringerung von Drehungleichförmigkeiten erlaubt nicht nur eine Absenkung der herkömmlicherweise höheren Kalt-Leerlaufdrehzahl auf den Wert der Warm-Leerlaufdrehzahl, sondern darüberhinaus auch eine Absenkung der so entstandenen globalen Leerlaufdrehzahl auf einen Wert unterhalb der herkömmlichen Warm-Leerlaufdrehzahl. Vorteilhaft wird die elektrische Maschine nämlich so gesteuert, daß sie die Drehungleichförmigkeiten des Verbrennungsmotors im Kalt- wie im Warm-Leerlauf zu einem überwiegenden Teil oder sogar praktisch vollständig kompensiert. Vorzugsweise wird dann die mittlere Leerlaufdrehzahl des Verbrennungsmotors wesentlich in Richtung der kritischen Drehzahl plus dem üblicherweise bei dem jeweiligen Verbrennungsmotor erforderlichen Sicherheitsabstand abgesenkt (Anspruch 2). Vorzugsweise wird hierunter eine Absenkung der mittleren Leerlaufdrehzahl gegenüber der Warm-Leerlaufdrehzahl des gleichen ungedämpften Motors verstanden, die wenigstens 50 %, besonders vorzugsweise wenigstens 75 % der Drehzahlschwankungsamplitude des gleichen ungedämpften Motors im Warmleerlauf beträgt.

Folgendes Zahlenbeispiel soll dies veranschaulichen: bei einem Verbrennungsmotor beträgt die kritische Drehzahl z.B. 600 min⁻¹ und der Sicherheitsabstand 50 min⁻¹. Die Drehzahlschwankungsamplitude im Warmleerlauf beträgt 100 min⁻¹, in Kaltleerlauf 250 min⁻¹. Im herkömmlichen Fall ergibt sich mit diesen Zahlen folgendes: im warmen Zustand beträgt die mittlere Leerlaufdrehzahl 750 min⁻¹ (nämlich die Summe von kritischer Drehzahl, Sicherheitsabstand und Ungleichförmigkeitsamplitude). Die Momentandrehzahl schwankt dann zwischen 650 min⁻¹ (der Summe von kritischer Drehzahl und Sicherheitsabstand) und zwischen 850 min⁻¹ (nämlich der Summe von kritischer Drehzahl, Sicherheitsabstand und zweifacher Schwankungsamplitude). Im kalten Zustand beträgt die mittlere Leerlaufdrehzahl 900 min⁻¹, ihr Momentanwert schwankt zwischen 650 min⁻¹ und 1150 min⁻¹. Bei der Ausgestaltung gemäß Anspruch 2 ist die (jetzt globale) mittlere Leerlaufdrehzahl gegenüber der Warm-Leerlaufdrehzahl des ungedämpften Motors z.B. um den halben Wert der ungedämpften Drehzahlschwankungsamplitude im warmen Zustand abgesenkt, also um 50 min⁻¹ auf 700 min⁻¹. Im Grenzfall entspricht die Absenkung der gesamten Drehzahlschwankungsamplitude, die Absenkung beträgt also 100 min⁻¹ und führt auf 650 min⁻¹.

Wie im folgenden erläutert wird, sind verschiedene Betriebszustände der elektrischen Maschine möglich. Im einfachsten Fall hat sie im Mittel keine antreibende oder bremsende Zusatzfunktion, sondern dient nur der Drehungleichförmigkeitsverringerung. Sie bringt hierzu ein Wechseldrehmoment auf, und zwar wirkt sie bei einem unter dem mittleren Verbrennungsmotor-Drehmoment liegenden Drehmoment-Momentanwert antreibend und bei einem darüberliegenden Drehmoment-Momentanwert bremsend. Die Maschine arbeitet also im schnellen Wechsel motorisch/generatorisch. Abgesehen von geringfügigen Verlusten gleicht dabei der bei der antreibenden Phase benötigte Energiebetrag dem bei der bremsenden Phase gewonnenen. Dieser jeweils zu einer Antriebs- und Bremsphase gehörende Energiebetrag kann in einem schnellen Speicher, z.B. einem Kondensator zwischengespeichert werden. Die Drehungleichförmigkeitsverringerung ist also eine Drehmomentglättung, die - abgesehen von den geringfügigen Verlusten - keine Energie verbraucht.

Vorteilhaft sind jedoch auch andere Betriebsweisen, bei denen die elektrische Maschine im Leerlauf zusätzlich zu dem variierenden Drehmoment ein konstantes Drehmoment aufbringt (Anspruch 3). "Konstant" schließt hier auch "relativ langsam veränderlich" (bezogen auf die schnelle Variation für die Drehungleichförmigkeitsverringerung) ein. Das konstante Drehmoment kann ein bremsendes Drehmoment sein und z.B. der bereits oben erwähnten Generatorfunktion dienen. Ein Beispiel für eine Überlagerung eines antreibenden Drehmoments ist eine Funktionsweise, bei der die elektrische Maschine im Rahmen einer Leerlaufregelung ein Absinken der mittleren Leerlaufdrehzahl aufgrund einer plötzlichen Lastzuschaltung eines mechanischen Verbrauchers durch Aufbringen eines entsprechenden antreibenden Moments vermeiden hilft.

In diesen Fällen ist die Energiebilanz der elektrischen Maschine nicht mehr - wie im Fall der reinen Drehungleichförmigkeitsverringerung - ausgeglichen. Beispielsweise liefert sie bei überlagertem bremsenden Drehmoment in den Bremsphasen mehr Energie als sie in den jeweils folgenden Antriebsphasen benötigt (diese Überschußenergie ist z.B. zur Versorgung des Bordnetzes bestimmt). Falls der Betrag des überlagerten Drehmoments größer als die Drehmomentschwankungsamplitude ist, wechselt das von der elektrischen Maschine aufgebrachte Drehmoment sein Vorzeichen nicht mehr. Sie wirkt dann nur noch bremsend (oder antreibend), wobei das Bremsmoment (bzw. das Antriebsmoment) variiert.

Die Steuerung der elektrischen Maschine zur Erzielung der Temperaturabhängigkeit der Drehungleichförmigkeitsverrringerung kann vorteilhaft durch Steuerung (im engen Sinn), Regelung und/oder Mischformen hiervon erfolgen (Anspruch 4). Besonders einfach ist die Steuerung (im engen Sinn): beispielsweise können in einem Kennfeld die erwarteten Werte für die Amplitude und ggf. die Phase der Drehmomentvariationen des Verbrennungsmotors in Abhängigkeit von der Verbrennungsmotortemperatur und ggf. der Lufttemperatur gespeichert sein. Nach Ermittlung der Temperatur(en) durch einen oder mehrere geeignete Temperatursensoren wird der entsprechende Amplituden- und ggf. Phasenwert aus dem Kennfeld gelesen; daraus wird die Amplitude und ggf. Phase der entgegenzurichtenden Drehmoment-"Schwingung" der elektrischen Maschine bestimmt. Die Temperatur des Verbrennungsmotoers kurz nach dem Start kann auch indirekt ermittelt werden, z.B. durch Messung des zum Starten erforderlichen Moments, auf das wiederum indirekt durch den zum Starten erforderlichen elektrischen Leistungsverlauf geschlossen werden kann. Selbstverständlich kann im Kennfeld auch von vornherein die von der elektrischen Maschine aufzubringende Drehmomentschwingung in Abhängigkeit von der/den Temperatur/en charakterisiert sein. Diese Steuerungsart kann allerdings Störgrößen, die nicht in das Kennfeld eingegeangen sind (z.B. Motorverschleiß), nicht berücksichtigen.

Bei einer reinen Regelung benötigt man hingegen keine Temperaturmessung und auch keine Vorkenntnis der Abhängigkeit der Ungleichförmigkeitsamplitude von der Temperatur und anderen Störgrößen. Es genügt, die jeweils aktuell vorliegende Drehungleichförmigkeit zu messen - etwa durch Auswertung der Signale eines Kurbelwellen-Drehwinkelgebers - und die elektrische Maschine so zu steuern, daß sie den Drehungleichförmigkeiten in Abhängigkeit von dem Meßwert entgegenwirkt. Da sich eine Drehmomentschwankung des Verbrennungsmotors nur verzögert als Drehungleichförmigkeit äußert (z.B. bei einer sinusförmigen Ungleichförmigkeit mit einer Phasenverschiebung von 0° bis 90°), ist die Regelung i.a. so ausgebildet, daß sich eine gemessene Über- oder Unterschreitung der mittleren Drehzahl erst in einem nachfolgenden Arbeitstakt in einem entsprechenden entgegengerichteten Eingriff der elektrischen Maschine auswirkt. Da die Drehungleichförmigkeiten i.a. eine relativ große zeitliche Kohärenz aufweisen, d.h. über mehrere aufeinanderfolgende Takte stark korreliert sind, kann man mit dem nur verzögerten Regeleingriff eine relativ starke Drehungleichförmigkeitsunterdrückung erzielen.

Vorteilhaft sind auch Mischformen von Steuerung (im engen Sinn) und Regelung. Möglich ist beispielsweise eine störgrößenbeaufschaltete Regelung, bei der z.B. das Temperatursignal den Reglereingang oder -ausgang beeinflußt, so daß bereits dem ersten Eingriff der elektrischen Maschine ein ungefährer Wert für die zu bei der vorliegenden Temperatur erwartende Drehungleichförmigkeit zugrundegelegt wird. Die anfängliche Regeldifferenz ist dadurch kleiner und kann wesentlich schneller zurückgelegt werden. Eine andere vorteilhafte Möglichkeit ist eine Adaptivsteuerung (im engen Sinn). Hierbei werden die bei der gesteuerten Verringerung unerwünscht verbleibenden Drehungleichförmigkeiten ermittelt und nach Mittelung zu einer langsamen Verstellung (Adaption) der Steuerwerte verwendet, dahingehend, daß diese unerwünschten Abweichungen verschwinden. Hiermit finden Störgrößen, wie z.B. Verschleiß, im Kennfeld Berücksichtigung.

Die Erfindung ist auch auf ein Verfahren zur Leerlaufsteuerung eines Verbrennungsmotors gerichtet. Bezüglich der Merkmale, Ausgestaltungen und Vorteile des erfindungsgemäßen Verfahrens wird auf Anspruch 5 sowie die vorstehenden und folgenden Ausführungen zum Antriebssystem und dessen Ausgestaltungen verwiesen.

Die Erfindung wird nun anhand von Ausführungsbeispielen und der angefügten schematischen Zeichnung näher erläutert. In der Zeichnung zeigen:
- Figur 1: ein Drehmoment- und Drehzahl-Zeit-Diagramm für Leerlauf bei Betriebstemperatur sowie tiefer Temperatur;
- Figur 2: ein Diagramm entsprechend Figur 1, jedoch mit zusätzlicher Leerlaufdrehzahl-Absenkung;
- Figur 3: eine Schemadarstellung der wichtigsten Funktionseinheiten des Antriebssystems;
- Figur 4: ein Flußdiagramm eines Verfahrens zur Leerlaufsteuerung;
- Figur 5: ein Diagramm entsprechend Figur 1, jedoch bei einem System mit herkömmlicher Leerlaufsteuerung.

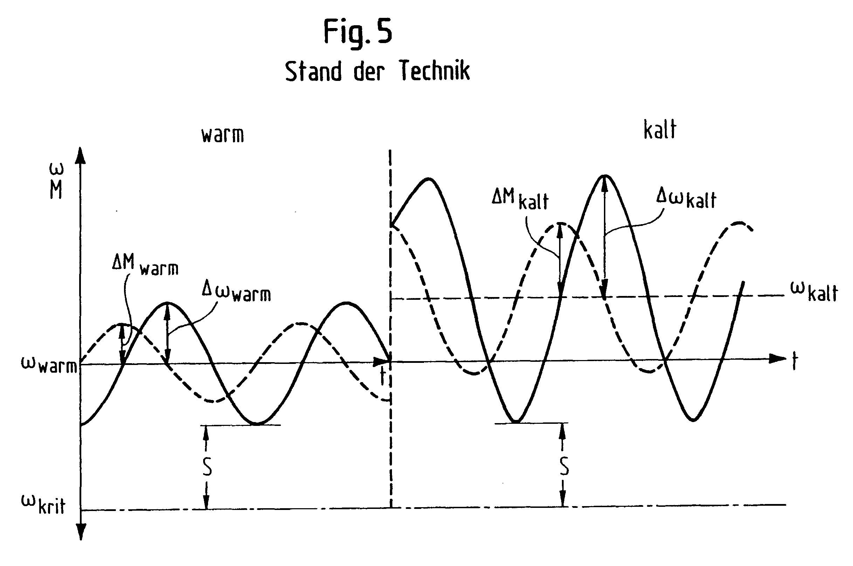

Zur Veranschaulichung wird zunächst die im Stand der Technik übliche Leerlaufsteuerung beschrieben: ein Hubkolben-Verbrennungsmotor zeigt gemäß Figur 5 bei Betriebstemperatur Drehzahlschwankungen um eine mittlere Leerlaufdrehzahl ω_{warm}. Diese haben i.a. als Funktion der Zeit einen komplizierten Verlauf, der hauptsächlich periodisch ist und einen hier vernachlässigten, kleinen, nicht-periodischen Anteil aufweist. Zur Vereinfachung wird im folgenden ein sinusförmiger Verlauf angenommen. Die Amplitude der Drehzahlschwankungen hat bei Betriebstemperatur den Wert Δω_{warm}. Ursache der Drehungleichförmigkeiten sind Drehmomentschwankungen ΔM des Verbrennungsmotors, deren Phase zwischen 0° und 90° voreilt (gestrichelt gezeichnet). In den Figuren ist zur deutlicheren Darstellung eine Voreilung von 90° gezeichnet. Der Verbrennungsmotor hat eine sog. kritische Drehzahl ώₖᵣᵢₜ, die auch kurzfristig nicht unterschritten werden darf. Um zu erreichen, daß die kleinste vorkommende Drehzahl einen Sicherheitsabstand S über der kritischen Drehzahl ωₖᵣᵢₜ liegt, ist die mittlere Leerlaufdrehzahl ω_{warm} auf den folgenden Wert eingestellt: ω_{warm} = **ω**ₖᵣᵢₜ + δω_{warm}. Typische Zahlenwerte hierfür sind: ωₖᵣᵢₜ = 600 min⁻¹, S = 50 min⁻¹, Δω_{warm} = 100 min⁻¹, woraus folgt: ω_{warm} = 750 min⁻¹. Bei tiefer Temperatur, z.B. bei -20°C, ist die Drehzahlschwankungsamplitude auf einen Wert Δωₖₐₗₜ erhöht. Damit die kleinste vorkommende Drehzahl nach wie vor den Sicherheitsabstand S über der kritischen Drehzahl liegt, ist die mittlere Leerlaufdrehzahl im Stand der Technik um den Betrag der Vergrößerung der Drehzahlschwankungsamplitude, also um Δωₖₐₗₜ - **Δω**_{warm} erhöht. Typische Zahlenwerte hierfür sind: Δωₖₐₗₜ = 250 min⁻¹, Δωₖₐₗₜ - Δω_{warm} = 150 min⁻¹, woraus folgt: Δωₖₐₗₜ = 900 min⁻¹.

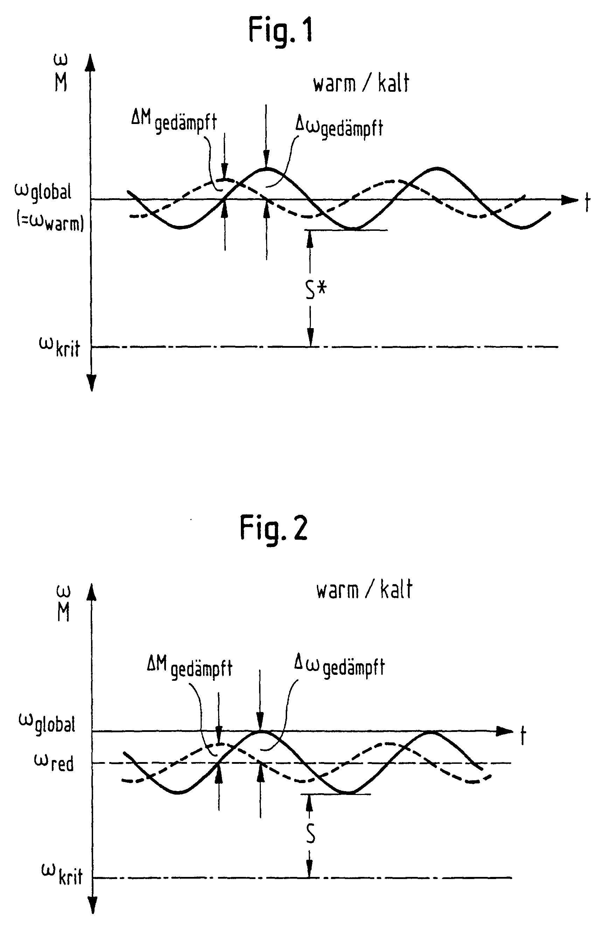

Bei dem Figur 1 zugrundeliegenden Ausführungsbeispiel der Erfindung werden die Drehungleichförmigkeiten aktiv gedämpft. Bei kalten Temperaturen ist die Bedämpfung entsprechend der dort größeren Drehzahlschwankungsamplitude vergrößert, so daß sich im Ergebnis bei Betriebstemperatur wie bei tiefer Temperatur eine gleich große verbleibende Drehzahlschwankung zeigt. Bei dem dargestellten Beispiel beträgt deren Amplitude Δώ_{gedämpft} die Hälfte der Amplitude Δώ_{warm} der ungedämpften Drehzahlschwankung bei Betriebstemperatur. Bei anderen (nicht gezeigten) Ausführungsformen ist die Bedämpfung stärker; hier verbleiben 25 % der ungedämpften Amplitude Δώ_{warm} oder weniger (z.B. weniger als 20 %, 15 %, 10 %). Aufgrund der Verringerung der Amplitude liegt bei unveränderter mittlerer Leerlaufdrehzahl - jetzt als ώ_{global} bezeichnet - ein vergrößerter Sicherheitsabstand S* vor. Beispielsweise beträgt die Dämpfung der Amplitude 50 %, die verbleibende Amplitude Δω_{gedämpft} beträgt also 50 min⁻¹. Entsprechend hat sich der Sicherheitsabstand vergrößert auf S* = 100 min⁻¹.

Bei dem Figur 2 zugrundeliegenden Ausführungsbeispiel ist der Sicherheitsabstand wieder auf den mindestens notwendigen Wert S zurückgeführt, und zwar durch globale Absenkung der mittleren Leerlaufdrehzahl auf einen verringerten Wert ω_{red}. Der Absenkungsbetrag der mittleren Leerlaufdrehzahl entspricht dem Betrag der Amplitudenverringerung aufgrund der aktiven Dämpfung. Wird etwa die Drehzahlschwankungsamplitude - wie im obigen Beispiel - um 50 % von 100 min⁻¹ auf 50 min⁻¹ verringert, so wird die mittlere Leerlaufdrehzahl entsprechend von 750 min⁻¹ auf 700 min⁻¹ abgesenkt.

Bei anderen (nicht durch eigene Figur veranschaulichten) Ausführungsformen erfolgt die aktive Drehungleichförmigkeitsdämpfung nur bei kalten Temperaturen. Bei Betriebstemperatur ergibt sich daher ein Bild entsprechend dem mit "warm" gekennzeichneten Teil von Figur 5. Bei niedrigen Temperaturen werden die Drehungleichförmigkeiten hingegen aktiv auf den bei Betriebstemperatur vorliegenden Wert gedämpft, so daß sich auch hierfür ein Bild entsprechend dem mit "warm" gekenneichneten Teil von Figur 5 ergibt.

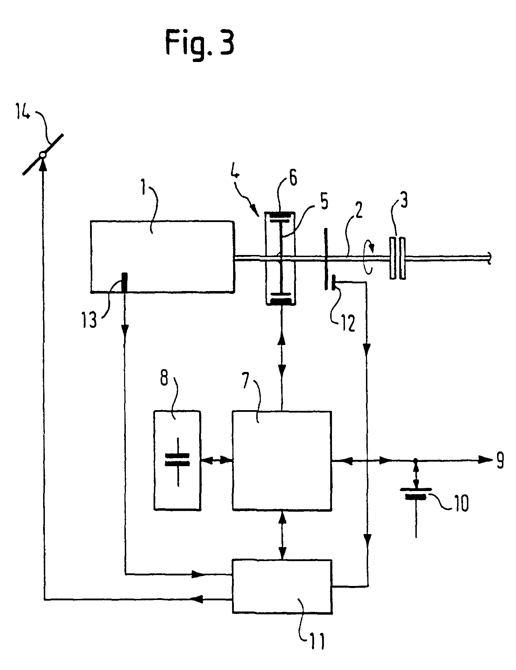

Ein Antriebssystem eines Fahrzeugs, z.B. eines Personenkraftwagens, gemäß Figur 3 weist einen Verbrennungsmotor 1 auf, der Drehmoment über eine Antriebswelle 2 (z.B. die Kurbelwelle des Verbrennungsmotors 1), eine Kupplung 3 und weitere (nicht gezeigte) Teile eines Antriebsstrangs auf die Antriebsräder des Fahrzeugs abgibt. Bei dem hier interessierenden Leerlaufbetrieb ist die Kupplung 3 geöffnet. Auf der Antriebswelle 2 sitzt konzentrisch eine elektrische Maschine 4, hier eine Asynchron-Drehstrommaschine. Sie weist einen direkt auf der Antriebswelle 2 sitzenden und drehfest mit ihr verbundenen Läufer 5 sowie einen z.B. am Gehäuse des Verbrennungsmotors 1 abgestützten Ständer 6 auf. Die (nicht dargestellte) Ständerwicklung wird durch einen Wechselrichter 7 mit elektrischen Strömen und Spannungen praktisch frei einstellbarer Amplitude, Phase und Frequenz gespeist. Es handelt sich z.B. um einen Gleichspannungs-Zwischenkreis-Wechselrichter, welcher aus einer konstant gehaltenen Zwischenkreis-Gleichspannung mit Hilfe von elektronischen Schaltern (z.B. Feldeffekttransistoren oder IGBT's) breitenmodulierte Pulse herausschneidet, die - gemittelt durch die Induktivität der elektrischen Maschine 4 - zu nahezu sinusförmigen Strömen der gewünschten Frequenz Amplitude und Phase führen. Der Wechselrichter 7 ist mit einem schnellen Energiespeicher 8, z.B. einem Kondensatorspeicher sowie einem Fahrzeugbordnetz 9 mit einer Bordnetzbatterie 10 gekoppelt. Wenn die elektrische Maschine 4 als Generator fungiert und Energie liefert, gibt der Wechselrichter 7 diese Energie nach Gleichrichtung an den schnellen Speicher 8 und/oder das Fahrzeugbordnetz 9 mit der Batterie 10 ab, je nach dem, ob die Energie kurzfristig gespeichert und/oder dem Bordnetz 9 mit der Batterie 10 zugeführt werden soll. Wenn die elektrische Maschine 4 als Motor fungiert, erhält sie die nötige elektrische Energie über den Wechselrichter 7 aus dem schnellen Speicher 8 und/oder der Batterie 10. Ein Steuergerät 11 steuert den Wechselrichter 7 und darüber die elektrische Maschine 4. Es empfängt Eingangssignale von einem Drehwinkelgeber 12 - aus denen es die momentane Drehzahl der Antriebswelle 2 ermittelt - sowie von einem Temperatursensor 13, der Information z. B. über die Kühlmitteltemperatur des Verbrennungsmotors 1 trägt. Bei dem vorliegenden Ausführungsbeispiel übernimmt das Steuergerät 11 auch die Leerlaufdrehzahlregelung des Verbrennungsmotors 1 und steuert hierzu über eine Stelleinrichtung die Kraftstoffzufuhr, z.B. mittels der Drosselklappe 14 des Verbrennungsmotors 1, sowie ggf. die Zündanlage, insbesondere den Zündzeitpunkt.

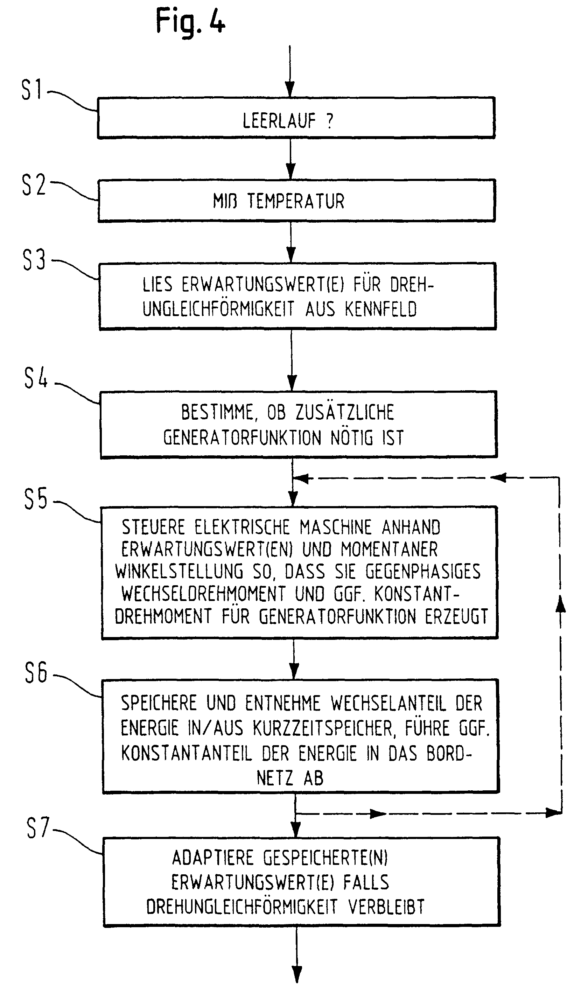

Im folgenden wird die Funktionsweise des Antriebssystems von Figur 3 anhand des Flußdiagramms gemäß Figur 4 erläutert: im Schritt S1 wird zunächst geprüft, ob der Verbrennungsmotor 1 im Leerlauf läuft. Nur dann kommen die folgenden Schritte zur Ausführung. (Bei anderen, nicht gezeigten Ausführungsformen kann die elektrische Maschine 4 jedoch auch bei höheren Drehzahlen und unter Last zur aktiven Drehungleichförmigkeitsdämpfung dienen). Im folgenden Schritt S2 wird die Temperatur des Verbrennungsmotors 1 z.B. mit Hilfe des Temperatursensors 13 gemessen. Im folgenden Schritt S3 liest das Steuergerät 9 Erwartungswerte für die Amplitude und Phase der Drehungleichförmigkeiten bzw. der Drehmomentschwankungen bei der gemessenen Temperatur aus einem Speicher (z.B. einem Kennfeld), welcher Teil des Steuergeräts sein kann. Im Schritt S4 wird durch Kommunikation mit einem (nicht gezeigten) Energieversorgungssteuergerät bestimmt, ob und mit welchem Betrag die elektrische Maschine 4 Energie für das Fahrzeugbordnetz 9 liefern soll. Im Schritt S5 steuert das Steuergerät den Wechselrichter 7 und damit die elektrische Maschine 4 anhand der mit dem Drehwinkelgeber 12 gemessenen momentanen Winkelstellung der Antriebswelle 2 und der aus dem Speicher gelesenen Erwartungswerte so, daß die elektrische Maschine 4 ein zu den Drehmomentschwankungen des Verbrennungsmotors 1 im wesentlichen gegenphasiges Wechseldrehmoment geeigneter Amplitude erzeugt. Diesem Wechseldrehmoment ist je nach gewünschter Generatorfunktion ein bremsendes Konstantdrehmoment überlagert. Ein Energiebetrag, welcher durch den Wechselanteil des Drehmoments kurzfristig in den Bremsphasen anfällt und in den jeweils nachfolgenden Antriebsphasen wieder verbraucht wird, wird im schnellen Speicher 7 jeweils für etwa eine halbe Periodenlänge zwischengespeichert (Schritt S6). Der vom überlagerten Konstantdrehmoment herrührende konstante Energiefluß wird hingegen ins Bordnetz 9 abgeführt. Im Schritt S7 wird bestimmt, wie groß die trotz aktiver Dämpfung verbleibenden Drehungleichförmigkeiten sind. Falls Sie eine vorgegebene Höchstgrenze überschreiten, wird hieraus auf eine Abweichung der tatsächlichen Drehungleichförmigkeitswerte von den erwarteten Werten geschlossen und die im Steuergerät 11 gespeicherte und im Schritt S3 verwendete Erwartungswertinformatiön geändert, und zwar den tatsächlichen Werten angenähert. Die Schritte S5 und S6 werden in dauernder Wiederholung hintereinander durchlaufen. Ein Durchlaufen der Schritte S1 bis S4 ist nur erforderlich, falls sich an den äußeren Bedingungen (z.B. der Temperatur des Verbrennungsmotors 1, dem Energiebedarf des Bordnetzes 9 oder der Leerlaufbedingung) etwas ändert. Es genügt, daß diese Schritte nur auf Anforderung bei einer Änderung (z.B. durch einen Interrupt) abgearbeitet werden, oder jeweils nach einer Vielzahl von Abarbeitungen der Schritte S5 und S6. Auch der Schritt S7 für die Speicheradaption braucht nur hin und wieder ausgeführt zu werden. Für den Ablauf des Verfahrens gemäß Fig. 4 sorgt z.B. ein entsprechend programmierter Mikrocontroller, der Teil des Steuergeräts 11 ist.

Die temperaturabhängige Drehungleichförmigkeitsdämpfung ist so eingerichtet, daß die verbleibenden Drehzahlschwankungen bei allen Temperaturen gleich sind und z.B. der Hälfte des ungedämpften Werts bei Betriebstemperatur entsprechen. Das Steuergerät 11 regelt die Leerlaufdrehzahl auf einen abgesenkten, temperaturunabhängigen Wert, entsprechend der Darstellung gemäß Fig. 2.

## Patentansprüche

1. Antriebssystem, insbesondere für ein Kraftfahrzeug, mit
- einem Verbrennungsmotor (1);
- wenigstens einer elektrischen Maschine (4), die den Verbrennungsmotor (1) mit einem variierenden Drehmoment beaufschlagt, so daß Drehungleichförmigkeiten des Verbrennungsmotors (1) verringert werden,
- wobei die Amplitude der Änderungen des von der elektrischen Maschine (4) aufgebrachten Drehmoments bei Leerlauf in kaltem Zustand des Verbrennungsmotors (1) größer als im warmen Zustand ist; und
- einer Leerlaufsteuerung, welche die Leerlaufdrehzahl des Verbrennungsmotors (1) in kaltem Zustand nicht gegenüber derjenigen in warmem Zustand erhöht.

2. Antriebssystem nach Anspruch 2, bei welchem die mittlere Leerlaufdrehzahl des Verbrennungsmotors (1) in Richtung der kritischen Drehzahl des Verbrennungsmotors (1) zuzüglich einem üblicherweise erforderlichen Sicherheitsabstand abgesenkt ist.

3. Antriebssystem nach Anspruch 1 oder 2, bei welchem die elektrische Maschine (4) zusätzlich ein konstantes Drehmoment aufbringt, welchem das variierende Drehmoment zur Drehungleichförmigkeitsverringerung überlagert ist.

4. Antriebssystem nach einem der Ansprüche 1 bis 3, bei welchem die Temperaturabhängigkeit der Drehungleichförmigkeitsverringerung durch die elektrische Maschine (4) durch Steuerung, Regelung und/oder Mischformen hiervon erzielt wird.

5. Verfahren zur Steuerung der Leerlaufdrehzahl eines Verbrennungsmotors, insbesondere bei einem Antriebssystem nach einem der Ansprüche 1 bis 4, bei welchem
- wenigstens eine mit dem Verbrennungsmotor (1) gekoppelte elektrische Maschine (4) so gesteuert wird, daß sie ein den Drehmomentschwankungen des Verbrennungsmotors (1) entgegenwirkendes variierendes Drehmoment aufbringt,
- wobei die Größe des variierenden Drehmoments von der Temperatur des Verbrennungsmotors (1) abhängt, so daß verbleibende Drehmomentschwankungen im wesentlichen temperaturunabhängig sind, und
- wobei die Leerlaufdrehzahl des Verbrennungsmotors (1) bei tiefen Temperaturen nicht gegenüber derjenigen bei hohen Temperaturen angehoben wird.

## Claims

1. A drive system, especially for a motor vehicle, having
- an internal combustion engine (1);
- at least one electric machine (4), which exposes the internal combustion engine (1) to a varying torque so that rotational irregularities of the internal combustion engine (1) are reduced,
- in which the amplitude of the changes of the torque applied by the electric machine (4) during idling in the cold state of the internal combustion engine (1) is greater than in the warm state; and
- an idling control that does not increase the idling speed of internal combustion engine (1) in the cold state relative to that in the warm state.

2. A drive system according to Claim 2, in which the average idling speed of internal combustion engine (1) is reduced in the direction of the critical speed of the internal combustion engine (1) plus an ordinarily required safety margin.

3. A drive system according to Claim 1 or 2, in which the electric machine (4) additionally applies a constant torque on which the varying torque for the reduction of rotational irregularities is superimposed.

4. A drive system according to one of Claims 1 to 3, in which the temperature dependence of the reduction of rotational irregularities is achieved by the electric machine (4) by control, regulation and/or mixed forms of these.

5. A method for controlling the idling speed of an internal combustion engine, especially in a drive system according to one of Claims 1 to 4, in which
- at least one electric machine (4) coupled to the internal combustion engine (1) is controlled so that it applies a varying torque that counteracts the torque fluctuations of the internal combustion engine (1),
- in which the size of the varying torque depends on the temperature of the internal combustion engine (1) so that remaining torque fluctuations are essentially temperature-independent, and
- in which the idling speed of the internal combustion engine (1) at low temperatures is not raised relative to that at high temperatures.

## Revendications

1. Système d'entraînement, notamment pour un véhicule automobile, comprenant
- un moteur à combustion interne (1) ;
- au moins une machine tournante électrique (4) qui fournit au moteur à combustion interne (1) un couple variable, de manière à réduire des irrégularités de rotation du moteur à combustion interne (1),
- l'amplitude des variations du couple appliqué par la machine tournante électrique (4) est plus grande pour une marche au ralenti à l'état froid du moteur à combustion interne (1), qu'à l'état chaud ; et
- une commande de marche au ralenti, qui n'augmente pas la vitesse de rotation de ralenti du moteur à combustion interne (1) dans l'état froid par rapport à celle dans l'état chaud.

2. Système d'entraînement selon la revendication 1, dans lequel la vitesse de rotation de ralenti moyenne du moteur à combustion interne (1) est abaissée en direction de la vitesse critique du moteur à combustion interne (1) en plus d'un écart de sécurité généralement nécessaire.

3. Système d'entraînement selon la revendication 1 ou 2, dans lequel la machine tournante électrique (4) fournit en supplément un couple constant, auquel est superposé le couple variable destiné à la réduction des irrégularités de rotation.

4. Système d'entraînement selon l'une des revendications 1 à 3, dans lequel la relation à la température de la réduction des irrégularités de rotation par la machine tournante électrique (4) est obtenue par un mode commande, un mode régulation et/ou des formes combinées de ces modes.

5. Procédé de commande de la vitesse de rotation de ralenti d'un moteur à combustion interne, notamment dans un système d'entraînement selon l'une des revendications 1 à 4, d'après lequel
- au moins une machine tournante électrique (4) couplée avec le moteur à combustion interne (1) est commandée de façon à fournir et appliquer un couple variable agissant à l'encontre des variations de couple du moteur à combustion interne (1),
- la grandeur du couple variable dépendant de la température du moteur à combustion interne (1), de sorte que des variations de couple résiduelles sont sensiblement indépendantes de la température, et
- la vitesse de rotation de ralenti du moteur à combustion interne (1) aux basses températures, n'étant pas augmentée par rapport à celle aux températures élevées.
